## Europäisches Patentamt
## European Patent Office
## Office européen des brevets

(11) Numéro de publication: **0 123 582**
**A1**

(12) **DEMANDE DE BREVET EUROPEEN**

(21) Numéro de dépôt: **84400575.1**

(22) Date de dépôt: **21.03.84**

(51) Int. Cl.³: **H 04 N 9/40**

(30) Priorité: **24.03.83 FR 8304868**

(43) Date de publication de la demande:
**31.10.84 Bulletin 84/44**

(84) Etats contractants désignés:
**AT BE CH DE GB IT LI LU NL SE**

(71) Demandeur: **S.A. DEMIA**
**3 boulevard Pasteur**
**Luxembourg(LU)**

(84) Etats contractants désignés:
**BE CH DE GB IT LI NL SE AT**

(71) Demandeur: **SODECOM**
**15 bis rue de Marignan**
**F-75008 Paris(FR)**

(84) Etats contractants désignés:
**LU**

(72) Inventeur: **Mikrui, Antoine**
**37 rue Reuilly**
**F-75012 Paris(FR)**

(74) Mandataire: **Beauchamps, Georges et al,**
**Cabinet Z.Weinstein 20, avenue de Friedland**
**F-75008 Paris(FR)**

(54) Système de traitement de signaux de télévision en couleur, notamment du type SECAM, dans un dispositif de réception de tels signaux tel que par exemple récepteur de télévision, moniteur de contrôle ou analogue.

㊵ La présente invention concerne un système de traitement de signaux de télévision en couleur, notamment du type SECAM.

Selon l'invention, ce système comporte un dispositif récepteur de signaux vidéo d'information comprenant deux voies de traitement des signaux de sous-porteuse de chrominance ayant chacune un circuit accordé (80, 90) recevant directement le signal de sous-porteuse de chrominance associé à un discriminateur (81, 91; fournissant les signaux de différence de couleur $(E'_R - E'_Y)$ et $(E'_B - E'_Y)$; et un canal de traitement du signal d'information de luminance comprenant un circuit accordé (100) associé à un discriminateur (101).

La présente invention s'applique notamment aux récepteurs de télévision couleur, moniteur de contrôle ou analogue.

EP 0 123 582 A1

./...

FIG. 5

Système de traitement de signaux de télévision en couleur, notamment du type SECAM, dans un dispositif de
réception de tels signaux tel que par exemple récepteur
de télévision, moniteur de contrôle ou analogue.

La présente invention a pour objet un système de traitement de signaux de télévision en couleur, notamment du
type SECAM, appliqués à un dispositif récepteur tel
qu'un récepteur de télévision en couleur , un moniteur
de contrôle ou analogue, ce système comprenant des moyens
générateurs de sous-porteuses pour les signaux de
chrominance et de la porteuse du signal de luminance.

Les systèmes classiques destinés au traitement des signaux de chrominance et de luminance, du type SECAM,
sont fondés sur l'utilisation de deux sous-porteuses de
couleur respectivement de 4,406 et 4,25 MHz qui transmettent alternativement les signaux de chrominance $D_R$
d'une ligne et les signaux de chrominance $D_B$ de la ligne
suivante. Les sous-porteuses sont modulées en fréquence.
A cette fin les signaux de chrominance sont appliqués à
un étage modulateur, au moyen d'un commutateur électronique. Avant d'être mélangés aux signaux de luminance et
synchronisation, les signaux de chrominance sont appliqués à un filtre limiteur de bande, réduisant le bruit
de fond, du type à courbe anti-cloche. Puis les signaux
sont transmis au dispositif récepteur , par exemple à
l'aide d'un câble. Le dispositif récepteur comprend un
décodeur nécessairement équipé de filtres en cloche,
d'une bifurcation entre une voie retardée d'une durée de
ligne et une voie directe, et d'un permutateur piloté
par une bascule synchronisée par les signaux de synchronisation de ligne pour aiguiller les informations de
chrominance reçues sur une voie de sous-porteuse de l'information $D_R$ et une voie de sous-porteuse de l'information $D_B$; et un portier fermant les voies de sous-porteuse en l'absence de signaux des différences de couleur issus des lignes d'identification et corrigeant un fonctionnement à contre-temps de la bascule.

Des circuits de matriçage et de vidéo reconstituent à partir du signal vidéo composite $E'_Y$ et des signaux de différence de couleur $D_R = (E'_R-E'_Y)$ et $D_B = (E'_B-E'_Y)$ fournis par le décodeur les trois signaux de couleur $E'_B$, $E'_R$ et $E'_V$ nécessaires à la modulation du tube-image.

Ces systèmes connus ont un certain nombre d'inconvénients. Ainsi, on constate un manque de définition des couleurs provenant du fait que la bande passante de transmission des informations de chrominance est de l'ordre de 300 kHz, donc très faible, ce qui est très insuffisant pour une définition de couleur convenable et ne permet pas la transmission d'un ou de plusieurs mots binaires codés par exemple selon le mode "N.R.Z" (non retour à zéro). D'autre part, dans ces systèmes les signaux de chrominance sont soumis à un nombre d'opérations relativement important, ce qui provoque chaque fois une perte d'information. Ainsi, les lignes à retard utilisées dans le décodeur occasionnent de telles pertes d'information et on observe une réduction de la définition verticale, de la chrominance, car chaque information n'est transmise que pendant une ligne sur deux.

La présente invention a pour objectif de remédier aux inconvénients ci-dessus.

Pour cela, la présente invention concerne un système de traitement de signaux de télévision en couleur, notamment du type SECAM, comprenant un dispositif émetteur tel qu'une caméra de télévision en couleur, de signaux de sous-porteuse de chrominance et d'un signal de luminance vers un dispositif récepteur tel qu'un récepteur de télévision couleur, un moniteur de contrôle ou analogue, le dispositif récepteur comportant un décodeur des signaux vidéo reçus; le décodeur du dispositif récepteur étant caractérisé en ce qu'il comprend des premier et second circuits accordés recevant chacun un signal de sous-porteuse de chrominance, le premier circuit accordé étant relié à un discriminateur produisant le signal de différence de couleur $(E'_R - E'_Y)$ tandis que le second circuit accordé est relié à un autre discriminateur produisant le signal de différence de couleur $(E'_B - E'_Y)$, et un troisième circuit accordé recevant le signal d'information de luminance $E'_Y$ et relié à un discriminateur fournissant la composante continue du signal de luminance, les signaux de sortie des premier, second et troisième discriminateurs étant appliqués à un circuit de matriçage pour fournir les signaux de couleur $E'_R$, $E'_V$ et $E'_B$ , les trois discriminateurs étant synchronisés à chaque début de ligne sur un même signal d'horloge.

Selon une autre caractéristique de l'invention, le signal d'horloge est dérivé de l'horloge recevant les signaux de sortie des bases de temps ligne et trame du circuit de commande du tube-image.

Selon encore une autre caractéristique de l'invention, le signal d'horloge est le signal haute fréquence dérivé de l'horloge générale du dispositif émetteur.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :

- la figure 1 illustre sous forme d'un schéma-bloc le dispositif émetteur des signaux d'information vidéo;
- la figure 2 illustre sous forme d'un schéma-bloc un dispositif anti-copie;
- la figure 3 montre schématiquement le signal d'identification du contrôle de fonctionnement du commutateur électronique dans un récepteur SECAM et les signaux utilisés pour déterminer la période de présence de ce signal d'identification;
- la figure 4 illustre l'emplacement des tops de synchronisation formés par les salves d'oscillations anti-copie;
- la figure 5 illustre sous forme d'un schéma-bloc un dispositif de réception des signaux d'information vidéo selon la présente invention ; et
- la figure 6 est un schéma bloc d'un circuit de décodage de signaux anti-copie.

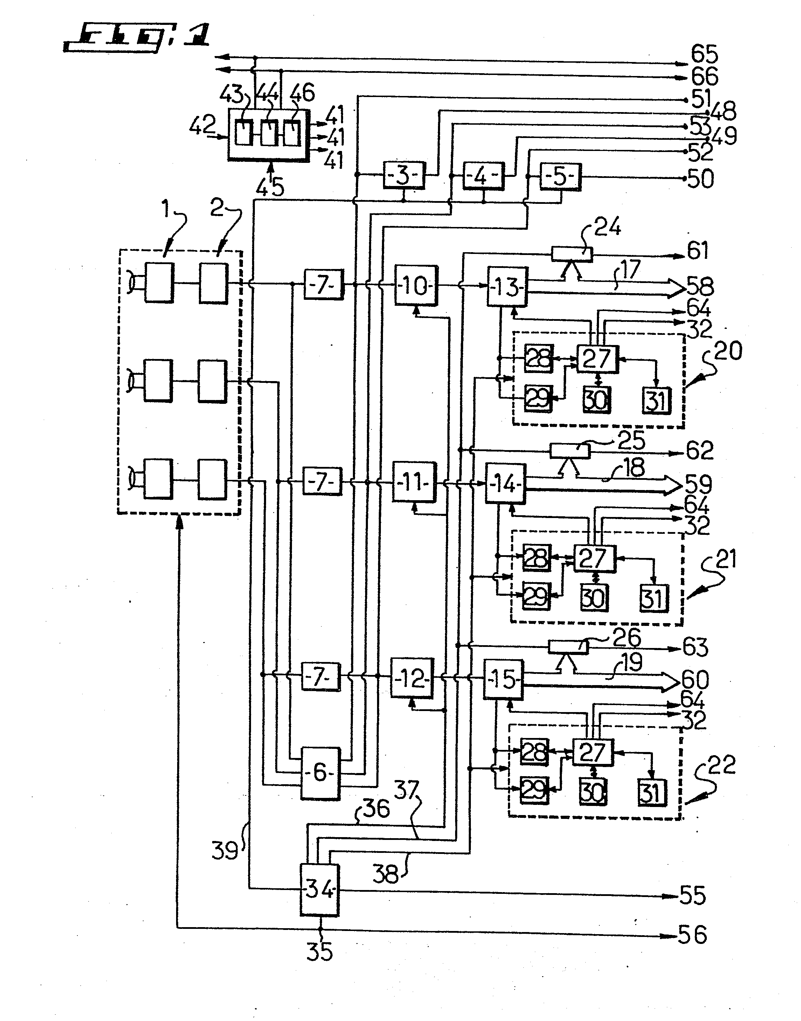

Dans le dispositif émetteur représenté en figure 1, on reconnaît en 1 un dispositif de prise de vue constitué d'une caméra de télévision en couleur et en 2 le dispositif des trois matrices destinées à produire à leurs sorties les signaux de chrominance, c'est-à-dire de différence de couleur $D_R = E'_R - E'_Y$ , $D_B = E'_B - E'_Y$ et le signal de luminance $E'_Y$ du type SECAM.

Le dispositif comporte trois oscillateurs 3, 4 et 5 avantageusement à quartz, qui sont contrôlés en tension, les oscillateurs 3 et 5 étant destinés à produire respectivement des fréquences sous-porteuses pour les signaux de chrominance $D_R$ et $D_B$, tandis que l'oscillateur 4 engendre la porteuse du signal de luminance. Les oscillateurs 3 et 5 sont adaptés pour produire des sous-porteuses ayant des fréquences égales à un multiple des sous-porteuses classiques de 4,406 et 4,250 MHz du système SECAM. Dans ce cas, le rapport des sous-porteuses

-5-

engendrées par les oscillateurs 3 et 5 est identique au rapport des sous-porteuses classiques susmentionnées, pour assurer la compatibilité du dispositif avec les dispositifs classiques. Bien entendu, les sous-porteuses sont modulées en fréquence par les signaux $D_R$ et $D_B$.

Par l'utilisation de sous-porteuses de chrominance ou de couleur ayant une fréquence multiple par rapport aux sous-porteuses classiques, la bande passante de transmission de données est suffisamment large pour assurer la bonne définition des couleurs et pour permettre la transmission d'un ou de plusieurs mots binaires codés par exemple selon le mode "N.R.Z." (non retour à zéro), connu en soi et appliqué par exemple au système télétexte ANTIOPE. De plus, le traitement ultérieur appliqué à de telles sous-porteuses modulées en fréquence se limitera à des opérations de division de fréquence.

Comme le montre la figure 1, le dispositif émetteur comprend un dispositif anti-copie 6. Celui-ci comporte essentiellement un clavier 61 permettant le choix d'un top prédéterminé par l'actionnement par exemple d'une touche ou de plusieurs touches, une mémoire morte 62 ayant pour fonction de transformer l'information introduite à l'aide du clavier en un signal numérique présenté par exemple en parallèle aux sorties de la mémoire. Ces sorties sont reliées à un groupe d'entrées parallèles d'un multiplexeur 63 qui reçoit aux entrées d'un second groupe les sorties d'un diviseur de tension 64. Celui-ci produit à partir d'une fréquence d'horloge indiquée en 65 soit la même fréquence à toutes ces sorties soit des fréquences différentes et spécifiques de chacune de ces sorties.

Le multiplexeur produit à sa sortie une séquence de salves d'oscillations de la même fréquence ou de fréquences

différentes, qui correspond au signal numérique à la sortie de la mémoire morte 62. Cette suite de salves d'oscillations est appliquée à un dispositif 66 qui est situé dans la voie des signaux provenant de la caméra 1,2. Le dispositif 66 a pour fonction d'inhiber la transmission d'au moins une partie du signal d'identification destinée à contrôler la phase du commutateur électronique de dispositif récepteur du type SECAM classique.

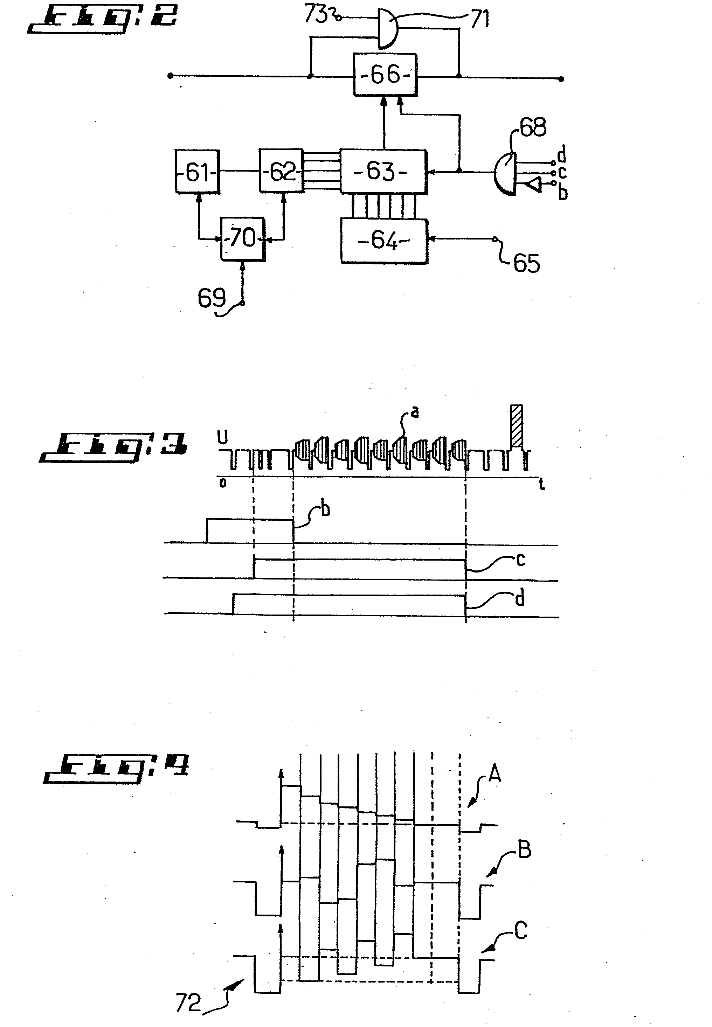

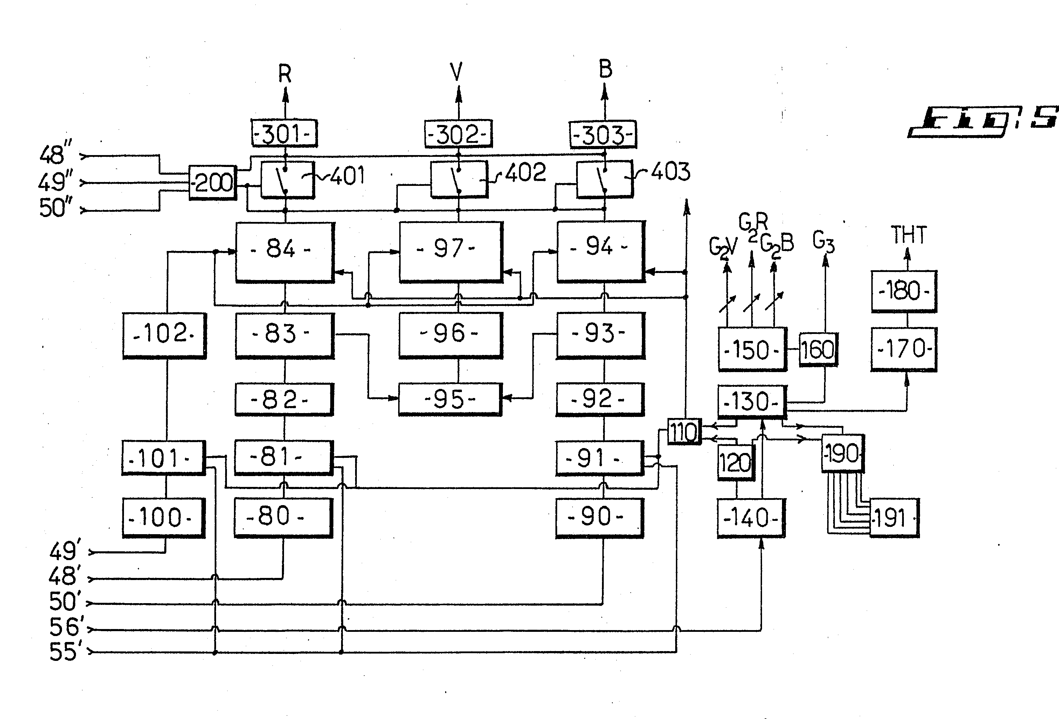

Le dispositif 66 et le multiplexeur sont commandés par un organe formant porte 68. Cette porte a trois entrées auxquelles sont appliqués les signaux b, c et d représentés à la figure 3. Ces signaux sont produits dans le codeur du type SECAM et représentent respectivement la porte des fréquences ligne double, l'emplacement d'identification trame et ligne et la porte d'identification. En a, on a représenté à la figure 3 de façon schématique le signal d'identification de contrôle du commutateur électronique que remplace au moins en partie les salves d'oscillations anti-copie. On constate que la période de présence du signal d'identification a se définit par le fait que les signaux c et d sont à l'état "1" et le signal en b est à l'état "0". En inversant le signal b on peut donc déterminer la période de présence du signal d'identification a à l'aide d'une porte ET comme cela est fait à la figure 2.

Concernant le fonctionnement des moyens qui viennent d'être décrits, il est à noter que les oscillations anti-copie présentant une fréquence située en dehors de la bande passante réservée au signal d'identification prévu dans les récepteurs du type SECAM classique. Il est possible d'enregistrer les signaux produits par la caméra 1 et 2 une première fois par exemple sur une bande magnétique. Mais si on voulait faire de ce premier enregistrement un second enregistrement, c'est-à-dire une copie, la qualité de cette dernière serait insuffisante et donnerait lieu à une reproduction de mauvaise qualité car lors de la reproduction à partir de la copie le fonctionnement correct du commutateur SECAM ne serait plus assuré. Concernant la fréquence des oscillations anti-copie, celles-ci pourraient avantageusement avoir la fréquence des oscillations produites par les oscillations de sous-porteuses et de porteuses 3, 4 et 5 dont la fréquence est égale à un multiple de la fréquence des sous-porteuses SECAM classiques.

Il ressort des remarques précédentes que l'insertion d'un code anti-copie formé par des salves d'oscillations ayant une fréquence en dehors de la bande passante des récepteurs classiques, dans les séquences des signaux fournies par la caméra ou toute autre source de signaux de télévision couleur contrarie toute activité d'enregistrement frauduleuse. D'autre part, la présence des signaux de code anti-copie dans les séquences de signaux d'origine et ainsi sur le support d'enregistrement d'origine permet d'assurer que cet enregistrement est un original et non pas une copie.

Il est encore à noter que ce dispositif anti-copie est adapté pour permettre sa connexion à un dispositif externe. A cette fin on a prévu une entrée 69 associée à une unité de traitement 70 coopérant et agissant, le cas échéant, avec le clavier 61 et la mémoire morte 62. Il est encore à noter, que le dispositif anti-copie permet également d'inscrire dans des trames des numéros qui permettent d'identifier celles-ci.

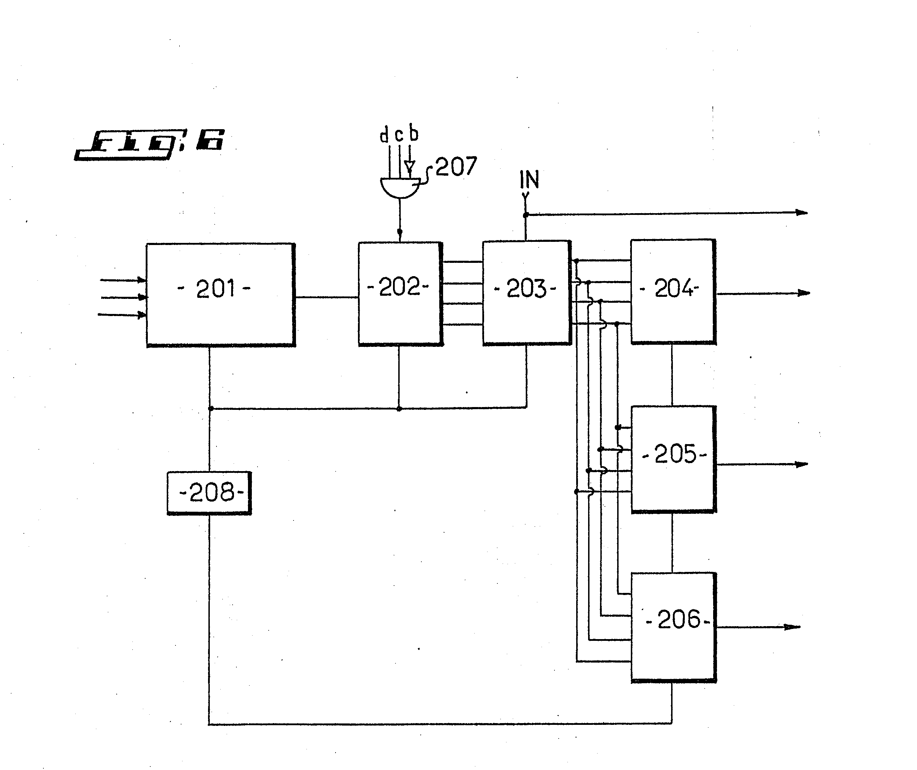

Suivant la figure 2, le dispositif anti-copie 6 comprend un autre organe ou circuit 71 permettant d'accomplir une fonction anti-copie. Comme le montre la figure 4, qui constitue un oscillogramme d'une même ligne qui corres-

pond à la mire de barres de 75% d'amplitude pour les couleurs blanc, jaune, bleuté en vert, vert, pourpre, rouge, bleu et noir (de gauche à droite), chaque signal en A, B et C est précédé par un top de synchronisation 72 qui descend en dessous des niveaux minimum possibles de chaque signal. Or l'organe 71 est adapté pour former les tops de synchronisation 72 d'une salve d'oscillations d'une fréquence qui se trouve en dehors de la bande de fréquence passante des dispositifs récepteurs SECAM classiques. Ces oscillations pourraient être les sous-porteuses produites par les oscillations 3,5 à la fréquence d'un multiple des fréquences sous-porteuses SECAM classiques. L'organe 71 pourrait être constitué par tout circuit approprié pouvant par exemple exécuter la fonction d'une porte ET à deux entrées prévue respectivement pour la réception d'une porte de synchronisation et en 73 de salves d'oscillations.

Dans ce dernier cas encore, du fait que les oscillations anti-copie se trouvent en dehors de la bande passante du dispositif récepteur, les copies faites à partir d'un premier enregistrement ne permettraient plus une reproduction de bonne qualité en raison d'une perte de synchronisme augmentant rapidement de copie en copie.

Le dispositif émetteur représenté comprend en outre trois convertisseurs analogiques-numériques 10,11, 12 chacun étant destiné au traitement d'un des trois signaux $D_R$, $D_B$ et $E'_Y$. Chaque convertisseur est relié à la sortie d'une des trois matrices de la caméra de télévision soit au moyen du dispositif 7 soit par l'intermédiaire des dispositifs anti-copie 6. En aval de chaque convertisseur 10 à 12 on constate la présence d'un circuit d'aiguillage respectivement 13, 14 et 15 reliant le convertisseur auquel il est associé à un bus de données de sortie 17,18 et 19 soit directement soit par l'intermédiaire d'un dispositif d'élimination de parasites 20,21 ou 22. Etant donné que sur chaque bus les signaux numériques en code binaire produits par le convertisseur analogique-numérique 10,11 ou 12 correspondant sont présents suivant une constellation en parallèle, on prévoit pour chacun des bus de données un convertisseur parallèle-série 24, 25 ou 26 destiné à convertir la constellation en parallèle en une constellation de signaux en série.

Chacun des dispositifs d'élimination de parasites 20,21 et 22 comprend une unité de traitement 27 telle qu'un micro-ordinateur ou microprocesseur, deux mémoires vives 28, 29 destinées à stocker respectivement la trame entière qui est en train d'être produite par la caméra et la trame précédente, ainsi qu'une mémoire morte 30 contenant la routine pour l'unité de traitement. Cette dernière peut également être programmée pour assurer la production d'une tension continue d'alimentation très stable, à l'aide de moyens convertisseurs numériques-analogiques 31 à partir d'un chiffre binaire préalablement défini. Cette tension continue peut servir de tension de référence pour le système d'alimentation des différents éléments du dispositif de traitement et notamment pour la production de l'alimentation des oscillations 3, 4 et 5, à la manière décrite. La borne de sortie de cette tension est appliquée en 32.

Le dispositif d'élimination de parasites peut également être pourvu de moyens connus en soi permettant la correction d'erreurs contenues dans les signaux numériques portant sur plusieurs éléments binaires par exemple en assurant la présence d'un nombre prédéterminé d'états binaires dans chaque signal numérique. Le dispositif de traitement 27 permet l'accomplissement de cette fonction connue en soi. L'unité de traitement peut encore être adaptée pour produire un signal indicateur d'absence
d'erreur dans les signaux numériques.

Concernant la coopération des convertisseurs analogiques
numériques 10 à 12 et du dispositif anti-copie, il est
à noter que les codes anti-copie pourraient déjà être
insérés dans la séquence de signaux de chrominance et
de luminance en forme numérique. Dans ce cas, le dispositif anti-copie 6 commanderait l'inhibition des convertisseurs pendant les intervalles de temps correspondants,
c'est-à-dire provoquerait le libre passage des parties
de séquence occupées par ce code, à travers les convertisseurs.

Pour assurer un parfait synchronisme du fonctionnement
des différents éléments du dispositif émetteur, celui-ci
comprend un oscillateur à quartz 34 constituant un générateur de signaux de haute fréquence, par exemple de
l'ordre de 100 MHz. Cet oscillateur accomplit la fonction d'une horloge générale. Comme le montre la figure,
les signaux de synchronisation de ligne et de trame et
de demi-ligne disponibles en 35 sont dérivés de l'horloge générale. Les convertisseurs analogiques-numériques
13 à 15, les convertisseurs parallèles-série 24 à 26 et
les dispositifs d'élimination de parasites 20 à 22 sont
également asservis à l'horloge. Les conducteurs des signaux d'horloge pour la commande de ces éléments sont
indiqués respectivement en 36,37 et 38. En 39, l'horloge
générale 34 fournit les signaux de synchronisation des
oscillateurs de sous-porteuses et de porteuse 3,4, 5. Le
synchronisme de ces oscillateurs est ainsi garanti par
le fait que les signaux de synchronisation sont dérivés
du même signal de haute fréquence. Il est à souligner
que tous les signaux de synchronisation et de référence
sont obtenus par division de la fréquence du signal
d'horloge, ce qui garantit une stabilité parfaite des signaux ainsi obtenus et un synchronisme parfait de fréquence et de phase des oscillateurs 3, 4 et5, et des signaux, c'est-à-dire de leur front avant, et ainsi de toutes les opérations effectuées par le système de traitement selon la présente invention. Pour assurer la stabilité de la fréquence de l'oscillateur d'horloge 34, par exemple pour empêcher toute dérivation thermique, cet oscillateur est monté dans une boucle de stabilisation (non représentée), comportant également les oscillateurs 3, 4 et 5.

Le dispositif d'alimentation en tension continue, désigné par le chiffre de référence 40 peut également être conçu pour produire des tensions d'alimentation extrêmement stables pour les oscillateurs de sous-porteuses et de porteuse 3, 4 et 5. Ces tensions sont disponibles aux trois bornes de sortie 41 du dispositif d'alimentation. Comme cela est schématiquement indiqué sur la figure, les moyens générateurs des tensions d'alimentation des oscillateurs sont avantageusement dérivés du signal d'horloge de haute fréquence produit par l'horloge générale 34. Le dispositif d'alimentation 40 reçoit en 42 ce signal d'horloge de par exemple 100 MHz. Dans le dispositif 40 ce signal est divisé par un diviseur de fréquence schématiquement indiqué en 43 qui en produit un signal de par exemple 1 MHz. Celui-ci est appliqué à un amplificateur saturé 44 fonctionnant en régime de tout ou rien et alimenté de son côté par la tension continue très stable produite en 32 par l'un des dispositifs d'élimination de parasites 20, 21 ou 22. Un convertisseur 45 transforme le signal de sortie de l'amplificateur en une tension continue disponible aux sorties 41. Cette tension est parfaitement stable du fait qu'elle est dérivée de la fréquence d'horloge par division de fréquence, ce qui garantit déjà un haut degré de stabilité et de la tension très stable produite par les dispositifs d'élimination de parasites à partir d'un chiffre binaire. L'amplitude de la tension de sortie est ainsi rigoureusement contrôlable. Il est encore à noter que le dispositif d'alimentation 40 est galvaniquement séparé du secteur par l'intermédiaire d'un transformateur (non représenté).

En se reportant à la figure 1, on constate que le dispositif de traitement comporte aux bornes de sortie 48 à 50 des signaux de sortie des oscillations 3, 4 et 5, c'est-à-dire des sous-porteuses modulées par les signaux de chrominance et de la porteuse modulée par le signal de luminance. Des bornes de sortie 51,50 et 52 sont prévues auxquelles peuvent être prélevés les signaux de chrominance et de luminance tels qu'ils ont été produits par la caméra de télévision en couleur. Le système comporte en outre des bornes de sortie 55, 56 auxquelles le signal d'horloge haute fréquence, produit par l'oscillateur 34 et les signaux de synchronisation de ligne et de trame et de demi-ligne peuvent être prélevés. Les symboles de référence 58 à 60 indiquent les bornes de sortie des bus de données 17 à 19 tandis qu'aux bornes 61 à 63 sont disponibles les signaux numériques en constellation en série. Le signal d'absence d'erreur est présent à la sortie 64. Les bornes 65 et 66 sont associées au dispositif d'alimentation 40 et désignent la masse et le potentiel d'alimentation.

Toutes les sorties susmentionnées ou au moins une partie essentielle de celles-ci peuvent être reliées à une prise du genre multibroche connectable à un dispositif récepteur tel que par exemple un appareil de télévision en couleur standard, moniteur pour contrôle visuel et analogues. En prévoyant également une prise par exemple du type multibroche au côté entrée, le système peut constituer une unité autonome susceptible d'être montée entre une caméra de télévision en couleur et un dispositif récepteur approprié. Mais il serait également possible d'insérer ce dispositif avec la caméra et le dispositif récepteur tel qu'un magnétoscope dans une même boîte pour former un genre de télécinéma, un ensemble de copies de film ou de documents quelconques.

Le fonctionnement du dispositif émetteur ressort immédiatement de la description qui vient d'être faite et de la figure 1. Il n'est donc pas nécessaire de le décrire, à l'exception du fonctionnement des dispositifs d'élimination des parasites. Chacun de ces dispositifs fonctionne de la manière suivante :

Pour éliminer les parasites, l'unité de traitement 27, sous la commande de la routine stockée dans la mémoire morte compare chaque trame à la trame précédente. Ces trames sont stockées respectivement dans les mémoires vives 28,29. A la suite de cette opération de comparaison, tous les éléments d'image qui sont communs aux deux trames seront conservés. Par contre les éléments non identiques seront éliminés. Il est à noter que les deux trames sont décalées dans le temps de 20 millisecondes. Les éléments représentatifs de parasites ne seront donc généralement plus les mêmes dans les deux trames. Par une programmation appropriée relativement simple, l'unité de traitement peut être adaptée pour distinguer une différence dans les deux trames, produites par un objet qui se déplace devant la caméra, d'une différence occasionnée par des parasites. En effet, l'objet en déplacement conserve son contour général, c'est-à-dire les éléments d'image qui le représentent conservent sensiblement leurs formes. Ils ont seulement changé de place sur les deux trames. Cette non altération de la forme générale des éléments d'image et représentative d'un objet en déplacement, d'une trame à la trame suivante, permet de distinguer des parasites qui sont aléatoires et donc en principe toujours différents d'une trame à l'autre. On comprend aisément que le dispositif d'élimination de parasites peut être rendu encore plus sophistiqué et sensible à des paramètres particuliers en le reliant à un calculateur externe programmé en conséquence.

Bien entendu, le dispositif émetteur tel qu'il est représenté sur la figure 1 et tel qu'il vient d'être décrit peut être modifié de diverses manières. Ainsi les signaux de chrominance et de luminance n'ont pas besoin d'être pris à la sortie de la caméra. Ils peuvent être issus de tout autre dispositif émetteur. On pourrait également envisager d'appliquer aux oscillateurs générateurs des sous-porteuses 3 et 5 non pas les signaux de chrominance dans leur version analogique, mais dans leur forme numérique obtenue aux sorties des convertisseurs analogiques-numériques 10 à 13 et le cas échéant après le traitement par les dispositifs d'élimination de parasites. On obtiendrait de cette manière des signaux de sortie débarrassés de parasites aléatoires. Il est encore une fois à souligner que le choix des fréquences de sous-porteuse devrait être fait de telle manière que toutes les informations et signaux dérivés puissent être transmis et traités de façon qu'ils présentent une haute définition et soient conservés dans l'état d'origine sans subir pratiquement aucune détérioration. Le système pourrait permettre la transmission des signaux numériques de tout code approprié, par exemple des signaux du type "N.R.Z" (non retour à zéro), tels que les signaux appliqués pour le système ANTIOPE.

La figure 5 représente le dispositif récepteur faisant l'objet de la présente invention et traitant les signaux d'information de chrominance et de luminance obtenus aux sorties du dispositif émetteur.

Le signal de sous-porteuse de chrominance $D_R$ tel que disponible à la borne de sortie 48 du dispositif émetteur est appliqué directement à la borne d'entrée 48' d'un circuit cloche 80 ou circuit accordé à la fréquence de sous-porteuse soit 4,406 MHz et permettant d'obtenir un signal de sous-porteuse d'amplitude aussi constante que possible. La sortie du circuit cloche 80 est reliée à un circuit discriminateur 81 démodulant le signal de différence de couleur $D_R$ modulé en fréquence et accordé sur la fréquence de repos de la sous-porteuse soit 4,406 MHz. Le signal démodulé est désaccentué dans le circuit de désaccentuation 82 et dirigé vers la matrice 84 par l'intermédiaire de l'amplificateur 83 pour retrouver à partir de $E'_Y$ et $(E'_B - E'_Y)$ le signal de couleur $E'_R$.

Le signal de sous-porteuse de chrominance $D_B$ tel que disponible à la borne de sortie 50 du dispositif émetteur est appliqué directement à la borne d'entrée 50' du circuit cloche 90 ou circuit accordé à la fréquence de sous-porteuse (4,250 MHz). La sortie du circuit cloche est reliée au circuit discriminateur 91 démodulant le signal de différence de couleur $D_B$ modulé en fréquence et accordé sur la fréquence de repos de la sous-porteuse soit 4,250 MHz. Le signal démodulé est désaccentué dans le circuit de désaccentuation 92 et dirigé vers la matrice 94 par l'intermédiaire de l'amplificateur 93 pour retrouver à partir des signaux $E'_Y$ et $(E'_B - E'_Y)$ le signal de couleur $E'_B$.

Comme cela est connu en soi, une matrice 95 permet de reconstituer le signal de différence de couleur $(E'_V - E'_Y)$ à partir des signaux $(E'_R - E'_Y)$ et $(E'_B - E'_Y)$ qui lui sont appliqués. Le signal $(E'_V - E'_Y)$ est appliqué au circuit de matriçage 97 par l'intermédiaire de l'amplificateur 96 pour retrouver à partir de $E'_Y$ le signal de couleur $E'_V$.

Le signal d'information de luminance disponible à la borne de sortie 49 du dispositif émetteur est appliqué directement à la borne d'entrée 49' d'un circuit accordé 100 à la fréquence de la porteuse du signal de luminance et dont la sortie est reliée à un discriminateur 101. La sortie du discriminateur 101 est reliée par l'intermédiaire d'un amplificateur 102 à chacune des entrées des matrices 84, 97, 94 pour retrouver les signaux $E'_R$, $E'_B$, $E'_V$ comme expliqué précédemment.

Le fonctionnement des circuits discriminateurs 81, 91 et 101 est synchronisé à chaque début de ligne par un signal d'horloge issu de l'oscillateur 110 formant horloge recevant des signaux de commande des bases de temps lignes et trames 120 et 130 auxquelles sont dirigés respectivement les signaux de synchronisation de ligne et de trame séparés par le séparateur 140. La borne d'entrée 56' du séparateur est reliée à la borne de sortie 56 du dispositif émetteur à laquelle sont disponibles les signaux de synchronisation de ligne et de trame émis par l'horloge générale 34 de ce dispositif émetteur.

Si on le souhaite, les discriminateurs du décodeur peuvent être asservis par les signaux haute fréquence disponibles à la borne 55 du dispositif émetteur et appliqués à la borne d'entrée 55' afin d'obtenir à partir de ces discriminateurs une démodulation pendant un intervalle de temps plus rapproché et donc une précision plus élevée.

La commande des canons du tube à image s'effectue, d'une façon connue en soi, en appliquant sur ses cathodes le signal de luminance, sur chacune de ses grilles $G_1$ les signaux de chrominance R, V, B et entre cathode et grille $G_1$ une polarisation de repos, des impulsions d'effacement issues de l'horloge 110 à la fréquence de ligne et à la fréquence de trame. On applique également sur chacune des grilles $G_2$ des tensions réglables séparément issues du bloc 150. Sur la grille $G_3$ est appliquée une tension réglable de concentration provenant du bloc 160 relié au bloc 140 et la base de temps ligne 130. Une très haute tension THT régulée est appliquée au tube et est issue du régulateur 180 et du circuit de redressement 170 relié à l'entrée du régulateur, l'entrée du circuit 170 étant reliée à la sortie de la base de temps ligne 130. Des circuits déviateurs et de convergence dynamique horizontale et verticale 190 et 191 sont reliés aux bases de temps trames et lignes pour composer les signaux de forme convenable aux enroulements correspondant aux trois canons rouge, vert, bleu.

Comme représenté en figure 5, le dispositif récepteur selon la présente invention comprend également un circuit de décodage 200 des signaux anti-copie insérés à la place d'au moins une partie du signal d'identification destiné à contrôler la phase du permutateur du dispositif récepteur du type SECAM. Ce circuit reçoit à ses entrées 48", 49" et 50" les trois signaux d'information vidéo disponibles aux bornes de sortie 48, 49 et 50 du dispositif émetteur. Ce circuit de décodage permet de visualiser la signification du code anti-copie sur le tube-image et a pour cela l'une de ses sorties reliée à l'entrée de trois amplificateurs vidéo 301,302 et 303 dont les trois sorties sont respectivement reliées aux électrodes de commande du rouge, du vert et du bleu du tube. Le circuit de décodage permet également de commander, au moment de la visualisation de la signification du code anti-copie, trois commutateurs analogiques 401 à 403 interposés respectivement entre les amplificateurs 301 à 303 et les matrices 84, 97 et 94. Ces commutateurs analogiques permettent ainsi d'arrêter la transmission des signaux de couleur issus des sorties des matrices 84, 97 et 94.

La figure 6 montre à titre d'exemple le schéma détaillé du circuit de décodage. Un circuit cloche 201 reçoit à ses entrées les signaux d'information vidéo contenant les salves d'oscillations anti-copie et est relié à un démultiplexeur 202 dont les sorties sont reliées aux entrées d'une mémoire morte 203 transformant l'information représentative du code anti-copie en un signal numérique par exemple en parallèle à ses entrées. A titre d'exemple, la mémoire morte 203 peut émettre le signal numérique sur quatre lignes de sortie si l'on souhaite une visualisation à seize couleurs de la signification du code anti-copie.

Les sorties de la mémoire morte sont reliées aux entrées respectives de trois registres à décalage 204, 205 et 206 parallèles-série, les sorties de ces registres étant reliées respectivement aux électrodes du rouge, du vert et du bleu du canon du tube par l'intermédiaire des amplificateurs 301 à 303.

Le démultiplexeur 202 est commandé par un organe formant porte 207 ayant trois entrées auxquelles sont appliqués les signaux b, c et d représentés à la figure 3. Comme déjà expliqué précédemment pour le dispositif émetteur, ces signaux sont produits dans le codeur du type SECAM et représentent respectivement la porte des séquences ligne double, l'emplacement d'identification trame et ligne et la porte d'identification. Pour déterminer la période de présence du signal d'identification a et donc la présence des signaux anti-copie il suffit de détecter le changement d'état du signal b appliqué à la borne d'entrée de l'organe formant porte 207 par l'intermédiaire d'un inverseur.

La commande du circuit de décodage 200 peut s'effectuer par exemple en actionnant une touche d'un clavier pour émettre un top d'impulsion à l'entrée "inhibition"IN de la mémoire morte 203, ce top impulsionnel commandant simultanément l'ouverture des commutateurs analogiques 401 à 403 afin d'empêcher l'envoi au tube-image des signaux de couleur apparaissant aux sorties des matrices. Les différents éléments constituant le circuit de décodage peuvent être asservis par une horloge générale 208 ou bien, si on le souhaite, par les signaux haute fréquence émis en sortie du dispositif émetteur.

On comprend donc à partir de ce qui précède que l'utilisateur peut à tout moment visualiser la signification du code anti-copie en commandant le circuit de décodage et par la même occasion contrôler la haute résolution de l'image correspondante. Bien entendu, lorsque le circuit de décodage est inactivé, le tube-image visualise une image telle que définie par les signaux de couleur apparaissant aux sorties des matrices 84, 97 et 94, tels que représentés à la figure 4. Il est à noter que le les signaux d'information du code anti-copie sont également transmis à travers les canaux de chrominance.

Le dispositif récepteur de la figure 5 peut être alimenté de façon autonome par un dispositif d'alimentation en tension continue (non représenté) et identique à celui utilisé pour l'alimentation du dispositif émetteur. Il va de soi que le dispositif récepteur peut être alimenté par le même dispositif d'alimentation en tension continue du dispositif émetteur lorsque les deux dispositifs sont reliés ensemble.

Les sorties et entrées susmentionnées des dispositifs émetteur et récepteur peuvent être reliées par l'intermédiaire d'un câble comportant à ses deux extrémités une prise du genre multibroche. Il est également possible de réaliser l'ensemble caméra, émetteur et récepteur en une unité autonome de manière à permettre à un utilisateur de contrôler directement le cadrage de l'image et sa haute résolution lors de sa prise de vue.

Diverses modifications peuvent être apportées au dispositif récepteur sans sortir du cadre de l'invention. Ainsi, la commande de la mise en service ou de l'arrêt du circuit de décodage au lieu de s'effectuer manuellement peut être réalisée d'une façon automatique par un circuit approprié, tel qu'un microprocesseur ou analogue.

Revendications

1. Système de traitement de signaux de télévision en couleur, notamment du type SECAM, comprenant un dispositif émetteur tel qu'une caméra de télévision en couleur, des signaux de sous-porteuse de chrominance et du signal de luminance vers un dispositif récepteur tel qu'un récepteur de télévision couleur, un moniteur de contrôle ou analogue, ledit dispositif récepteur comportant un décodeur des signaux vidéo d'information reçus; caractérisé en ce que le décodeur comprend des premier et second circuits accordés (80, 90) recevant chacun un signal de sous-porteuse de chrominance, le premier circuit accordé (80) étant relié à un discriminateur (81) produisant le signal de différence de couleur $(E'_R - E'_Y)$ tandis que le second circuit accordé (90) est relié à un autre discriminateur (91) produisant le signal de différence de couleur $(E'_B - E'_Y)$, et un troisième circuit accordé (100) recevant le signal d'information de luminance $(E'_Y)$ et relié à un discriminateur (101) fournissant la composante continue du signal de luminance ; les signaux de sortie des premier, second et troisième discriminateurs étant appliqués à un circuit de matriçage (84,97,94) pour fournir les signaux de couleur $(E'_R, E'_V$ et $E'_B)$ les trois discriminateurs étant synchronisés à chaque début de ligne sur un même signal d'horloge.

2. Système selon la revendication 1, caractérisé en ce que le signal d'horloge précité est dérivé de l'horloge (110) reliée aux sorties des bases de temps lignes et trames (120) et (130) auxquelles sont appliqués respectivement les signaux de synchronisation de ligne et de trame.

3. Système selon la revendication 1, caractérisé en ce que le signal d'horloge précité est un signal haute fréquence dérivé de l'horloge générale (34) du dispositif émetteur.

4. Système selon l'une des revendications précédentes, caractérisé en ce que les signaux de synchronisation de ligne et de trame sont chacun fournis par un séparateur (140) dont la borne d'entrée est reliée à la borne de sortie du dispositif émetteur à laquelle sont disponibles les signaux de synchronisation ligne et trame.

5. Système selon l'une des revendications précédentes, caractérisé en ce qu'il comporte un circuit de décodage (200) du code inscrit dans les signaux anti-copie insérés dans les séquences des signaux vidéo d'information fournis par le dispositif émetteur, et relié au tube-image afin de visualiser la signification du code du signal anti-copie.

6. Système selon la revendication 5, caractérisé en ce que le circuit de décodage (200) précité comprend un circuit cloche (201) recevant les signaux vidéo d'information, un moyen (202) pour reconstituer les informations relatives au code anti-copie inséré dans la séquence d'informations et relié à une mémoire morte (203) convertissant sous forme numérique les signaux qui lui sont appliqués, et des moyens d'application (204,205,206) reliés à la mémoire morte et dont les sorties sont respectivement reliées aux électrodes du rouge, du vert et du bleu du tube-image.

7. Système selon la revendication 6, caractérisé en ce que le moyen de reconstitution précité comprend un démultiplexeur (202) commandé par un moyen de détection tel qu'une porte logique (207) de la période d'apparition des informations anti-copie.

8. Système selon l'une des revendications 6 ou 7, caractérisé en ce que les moyens d'application précités comprennent trois registres à décalage (204,205,206) dont les sorties sont reliées respectivement au canon du rouge, du vert et du bleu précité par l'intermédiaire de trois amplificateurs vidéo (301,302,303).

9. Système selon la revendication 8, caractérisé en ce que les registres à décalage précités sont du type parallèle-série.

10. Système selon l'une des revendications précédentes, caractérisé en ce que les éléments constituant le circuit de décodage sont asservis par une horloge générale (208).

11. Système selon l'une des revendications 6 à 10, caractérisé en ce que le circuit de décodage précité est adapté pour décoder les signaux anti-copie insérés en partie à la place des signaux d'identification.

12. Système selon l'une des revendications précédentes, caractérisé en ce qu'il comprend également trois commutateurs analogique (401,402,403) interposés entre les matrices (84,97,94) des canaux de chrominance et les amplificateurs vidéo (301,302,303) précités, lesdits commutateurs étant commandés à partir du circuit de décodage (200) pour soit visualiser la signification du code anti-copie soit visualiser l'image représentée par les signaux de couleur issus des canaux de chrominance.

0123582

Fig. 1

0123582

**Fig. 2**

**Fig. 3**

**Fig. 4**

0123582

Fig. 5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 424 860 (DELVAUX)<br>* Colonne 4, lignes 46-73 * | 1 | H 04 N 9/40 |

-----

|  |  |
|---|---|
| | DOMAINES TECHNIQUES RECHERCHES (Int. Cl. ³) |
| | H 04 N - |

Le présent rapport de recherche a été établi pour toutes les revendications

| Lieu de la recherche<br>LA HAYE | Date d'achèvement de la recherche<br>03-07-1984 | Examinateur<br>CRISTOL Y. |
|---|---|---|

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

OEB Form 1503. 03.82